# EUROPEAN PATENT SPECIFICATION

(11) **EP 3 086 548 B1**
(45) Date of publication and mention of the grant of the patent: **16.10.2019**
(21) Application number: 14870909.0
(22) Date of filing: 01.07.2014
(51) Int. Cl.: H04N 5/74, G02B 26/10, H04N 3/08

(54) **IMAGE DISPLAY DEVICE AND CONTROL METHOD FOR SAME**
BILDANZEIGEVORRICHTUNG UND STEUERUNGSVERFAHREN DAFÜR
DISPOSITIF D'AFFICHAGE D'IMAGES ET SON PROCÉDÉ DE COMMANDE

(30) Priority: 17.12.2013 JP 2013260396
(43) Date of publication of application: 26.10.2016
(73) Proprietor: JVC Kenwood Corporation, Yokohama-shi, Kanagawa 221-0022 (JP)
(72) Inventor: OOHARA, Tatsuya, Yokohama-shi, Kanagawa 221-0022 (JP)
(74) Representative: Glawe, Delfs, Moll
(86) International application number: PCT/JP2014/003493
(87) International publication number: WO 2015/092948

(56) References cited:
- WO-A1-2013/100066
- JP-A- 2010 266 824
- JP-A- 2013 072 982
- US-A- 5 671 076
- US-A1- 2008 001 850
- US-A1- 2008 043 308
- US-A1- 2009 231 721

## Description

### Technical Field

The present invention relates to an image display device and a control method thereof, and more specifically, to an image display device of a laser scan system and a control method thereof.

### Background Art

An image display device of a laser scan system that projects and displays an image by scanning reflected laser light is known (for example, JP 2007-025522 A). The image display device of the laser scan system is used as, for example, a HUD (Head Up Display), which projects and displays an image on a windshield or a combiner of a vehicle, and a projector.

In the image display device of the laser scan system, an optical scanner including a mirror reflects laser light, and the mirror of the optical scanner is oscillated in a reciprocating manner in the horizontal direction and the vertical direction, thereby scanning the laser light.

During operation the oscillation frequency of an optical scanner might change due to the oscillation and/or electrical effects, which will - if not countered - lead to a distorted image. In order to compensate for a general change in oscillation frequency, for example US 2009/231721 A1 and US 2008/0043308 A1 suggest determining the actual oscillation frequency and adjust the clock of the driver for the laser light for each image to be projected over the proposed width by e.g. lengthening the scan time for each line to be projected. Similarly, US 2008/0001850 A1 suggest adjusting the clock of the driver for the laser light even on a line-wise level, i.e. each scan line might have its own scan time determined. Similar systems are disclosed in US 5,671,076 A, JP 2013-072982 A, JP 2010-266824 A and WO 2013/100066 A1.

### Summary of Invention

### Technical Problem

In the image display device of the related art, a feedback control is performed to control the laser light scanning operation of the optical scanner. For example, in JP 2007-025522 A, an optical sensor detects light reflected by the optical scanner, and the feedback of the detection result is performed. In another related art, an operation of an optical scanner provided with a piezoelectric film is detected by the piezoelectric film, and the feedback of the detection result is performed. In the feedback control in the image display devices of the related art, for example, the start timing of a drive signal to drive the optical scanner is controlled to keep the scanning frequency constant.

The reciprocating operation of the optical scanner may be varied due to the oscillation and electrical effects, in general leading to misalignment of the image to be displayed may occur in each scanning, for example, in each line in the horizontal direction. Some of the image display devices of the related art comprise measures to counter these. However, these technologies require a clock of the driver for the laser light that is accurately adjustable in terms of clock speed. It is an object of the present invention to compensate for variations in the oscillation frequency of a laser scan system without requiring a clock adjustable as to clock speed.

### Solution to Problem

To solve the above-mentioned object, the present invention provides an image display device including: a light source unit configured to output a light beam; a scanning unit configured to reflect the light beam and repeat a reciprocating operation in a predetermined scanning direction; a scanning detection unit configured to detect an operation range in which the scanning unit is operated in each forward or reverse scanning line of the reciprocating operation; a counter configured to count the detected operation range based on a clock; a display position determination unit configured to determine an image display position in each scanning line based on a difference between the detected operation range and a reference range; and a light source driving unit configured to drive the light source unit based on image data at a timing corresponding to the determined image display position, wherein when a counter value obtained by counting during the detected operation range by the counter is smaller than a counter value corresponding to the reference range that is an ideal operation range, the display position determination unit shortens an interval from a start point of operation of the scanning unit in a subsequent scanning line to the image display position by increasing a start count value of the counter in the subsequent scanning line based on the difference between the counter value of the detected operation range and the counter value corresponding to the reference range, and when a counter value obtained by counting during the detected operation range by the counter is larger than a counter value corresponding to the reference range that is an ideal operation range, the display position determination unit increases the interval from the start point of operation of the scanning unit in the subsequent scanning line to the image display position by delaying a counting start timing of the counter in the subsequent scanning line based on the difference between the counter value of the detected operation range and the counter value corresponding to the reference range.

The present invention also provides a control method of an image display device, the image display device including: a light source unit configured to output a light beam; and a scanning unit configured to reflect the light beam and repeat a reciprocating operation in a predetermined scanning direction, the control method including: detecting an operation range in which the scanning unit is operated in each forward or reverse scanning line of the reciprocating operation; counting the detected operation range based on a clock; determining an image display position in each scanning line based on a difference between the detected operation range and a reference range; and driving the light source unit based on image data at a timing corresponding to the determined image display position, wherein when a counter value obtained by counting during the detected operation range is smaller than a counter value corresponding to the reference range that is an ideal operation range, in the determining the image display position, shortening an interval from a start point of operation of the scanning unit in a subsequent scanning line to the image display position by increasing a start count value in the subsequent scanning line based on the difference between the counter value of the detected operation range and the counter value corresponding to the reference range, and when a counter value obtained by counting during the detected operation range is larger than a counter value corresponding to the reference range, in the determining the image display position that is an ideal operation range, increasing the interval from the start point of operation of the scanning unit in the subsequent scanning line to the image display position by delaying a counting start timing in the subsequent scanning line based on the difference between the counter value of the detected operation range and the counter value corresponding to the reference range.

### Advantageous Effects of Invention

According to the present invention, misalignment of an image in each scanning can be prevented.

### Brief Description of Drawings

Fig. 1 is a block diagram showing a configuration example of an image display device according to a first embodiment;
Fig. 2 is a block diagram showing an example of a configuration of a horizontal scanner according to the first embodiment;
Fig. 3 is a block diagram showing another example of the configuration of the horizontal scanner according to the first embodiment;
Fig. 4 is a block diagram showing a configuration example of an FPGA according to the first embodiment;
Fig. 5 is a waveform chart showing examples of signals used for the image display device according to the first embodiment;
Fig. 6A is an explanatory diagram for explaining an operation during ideal reciprocating scanning according to a reference example;
Fig. 6B is an explanatory diagram for explaining the operation during ideal reciprocating scanning according to the reference example;
Fig. 7A is an explanatory diagram for explaining an operation during reciprocating scanning variation according to the reference example;
Fig. 7B is an explanatory diagram for explaining the operation during reciprocating scanning variation according to the reference example;
Fig. 8A is an explanatory diagram for explaining an operation during reciprocating scanning variation according to the first embodiment;
Fig. 8B is an explanatory diagram for explaining the operation during reciprocating scanning variation according to the first embodiment;
Fig. 9 is an explanatory diagram for explaining an example of setting of a line reference value according to the first embodiment;
Fig. 10 is a block diagram showing a configuration example of a drawing position control unit according to the first embodiment; and
Fig. 11 is a flowchart showing an operation example of the drawing position control unit according to the first embodiment.

### Description of Embodiments

### (First embodiment)

A first embodiment of the present invention will be described below with reference to the drawings.

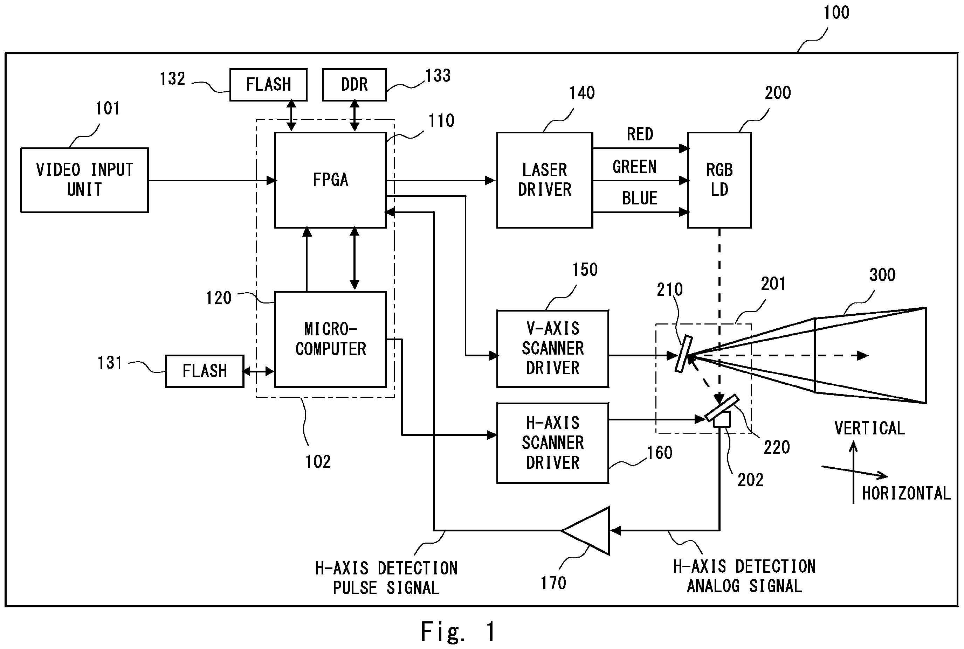

Fig. 1 shows a configuration of an image display device 100 according to this embodiment. The image display device 100 is an image display device of a laser scan system that reflects laser light using an optical scanner, and scans the reflected laser light in a reciprocating manner in the vertical direction and the horizontal direction, thereby displaying (drawing) an image on a plane of projection. For example, the image display device 100 projects and displays a projected image 300 on the plane of projection which is an image display surface of, for example, a windshield or a combiner of a vehicle.

As shown in Fig. 1, the image display device 100 includes a video input unit 101, an FPGA (Field Programmable Gate Array) 110, microcomputer 120, flash memories 131 and 132, a DDR (Double Data Rate) memory 133, a laser driver 140, a V-axis scanner driver 150, an H-axis scanner driver 160, a comparator 170, an RGB laser diode 200, a vertical scanner 210, and a horizontal scanner 220. The vertical direction (longitudinal direction, Y-direction) of an image to be displayed is also referred to as a V (Vertical)-axis direction, and the horizontal direction (lateral direction, X-direction) of the image is also referred to as an H (Horizontal)-axis direction.

The video input unit 101 receives video data to be displayed on the plane of projection, and sends the received video data to the FPGA 110. This video data includes three color signals, i.e., R (red), G (green), B (blue) color signals. For example, the video input unit 101 may receive a video generated by other devices such as a car navigation system, and the video input unit 101 may generate video data.

The FPGA 110 and the microcomputer 120 constitute a control unit 102 of the image display device 100, and perform various control operations necessary for image display. The FPGA 110 and the microcomputer 120 control the operations of the RGB laser diode 200, the vertical scanner 210, and the horizontal scanner 220 through the laser driver 140, the V-axis scanner driver 150, and the H-axis scanner driver 160, and draw the projected image 300. The control operations of the FPGA 110 and the microcomputer 120 may be implemented by hardware or software, or a combination thereof.

The FPGA 110 outputs, line by line, RGB image data based on the input video data, generates a V-axis drive signal for controlling the reciprocating operation of the vertical scanner 210, and outputs the generated V-axis drive signal. The FPGA 110 according to this embodiment sets the drawing position of the image so that misalignment of the image in each line can be prevented, as described later, based on an H-axis detection pulse signal of the horizontal scanner 220 that is obtained from the comparator 107. Then, the FPGA 110 drives the laser driver 140 to draw the image at the set position.

The microcomputer 120 generates an H-axis drive signal for controlling the reciprocating operation of the horizontal scanner 220, and outputs the generated H-axis drive signal. The flash memory 131 and the flash memory 132 are non-volatile storage units that store data, programs, and the like necessary for the operation of the microcomputer 120 and the FPGA 110, respectively.

The DDR (Double Data Rate) memory 133 is a frame buffer that temporarily stores video data to be input to the FPGA 110. The DDR memory 133 may be an SDRAM such as DDR 2 or DDR 3.

The laser driver 140 drives the RGB laser diode 200 according to the image data supplied from the FPGA 110. The laser driver 140 is a light source driving unit that drives the RGB laser diode 200 based on the image data at a timing corresponding to the image display position determined by the FPGA 110. The RGB laser diode 200 is driven by the laser driver 140 to emit laser light of three colors, i.e., R, G, and B. The RGB laser diode 200 is a light source unit that outputs laser light which is a light beam.

The V-axis scanner driver 150 drives the vertical scanner 210 in a reciprocating manner according to the V-axis drive signal supplied from the FPGA 110. The H-axis scanner driver 160 drives the horizontal scanner 220 in a reciprocating manner according to the H-axis drive signal supplied from the microcomputer 120.

The vertical scanner 210 or the horizontal scanner 220 is a scanning unit that repeats a reciprocating operation in the vertical direction or the horizontal direction. The vertical scanner 210 is an optical scanner that reflects the laser light applied from the RGB laser diode 200, and is driven by the V-axis scanner driver 150 to perform the reciprocating operation in the vertical direction. The horizontal scanner 220 is an optical scanner that reflects the laser light applied from the RGB laser diode 200, and is driven by the H-axis scanner driver 160 to perform the reciprocating operation in the horizontal direction. The horizontal scanner 220 includes a scanning detection unit 202 that detects the reciprocating operation in the horizontal direction, and outputs an H-axis detection analog signal representing the detected reciprocating operation. The scanning detection unit 202 detects the operation range of the horizontal scanner 200 in each forward or reverse scanning line of the reciprocating operation.

In this example, the horizontal scanner 220 reflects the laser light from the RGB laser diode 200 and the vertical scanner 210 further reflects the reflected light from the horizontal scanner 220, thereby drawing the projected image 300 on the plane of projection. It can also be said that the vertical scanner 210 and the horizontal scanner 220 constitute the optical scanner 201 that performs a reciprocating scanning operation in the vertical direction and the horizontal direction. For example, the vertical scanner 210 and the horizontal scanner 220 may be configured as one two-axis (two-dimensional) optical scanner.

The comparator 170 is a signal conversion unit that converts the H-axis detection analog signal, which is output from the horizontal scanner 220, into the H-axis detection pulse signal which can be processed by the FPGA 110.

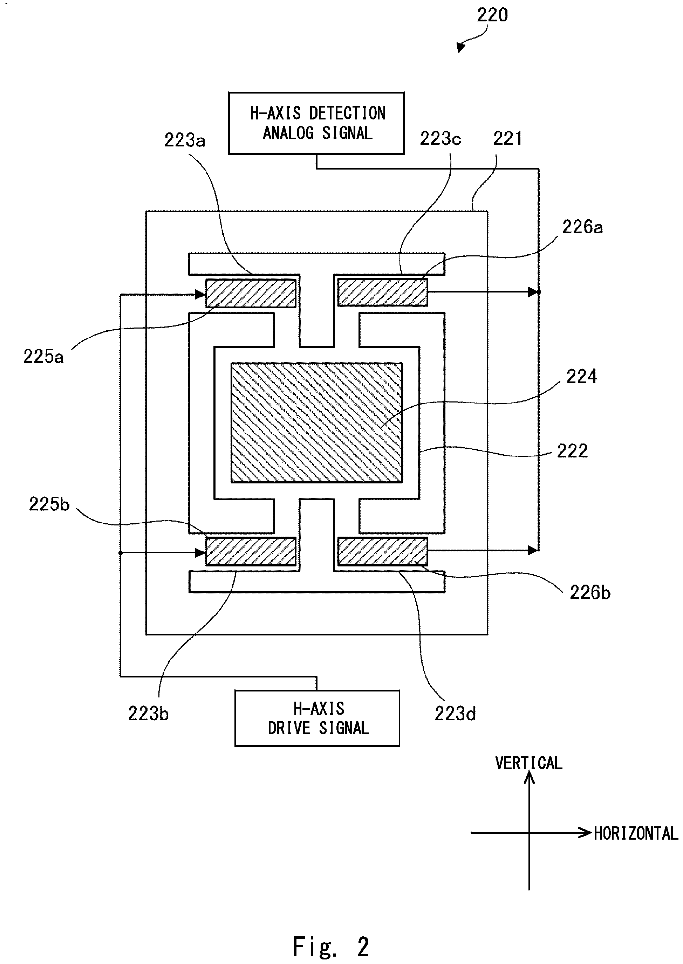

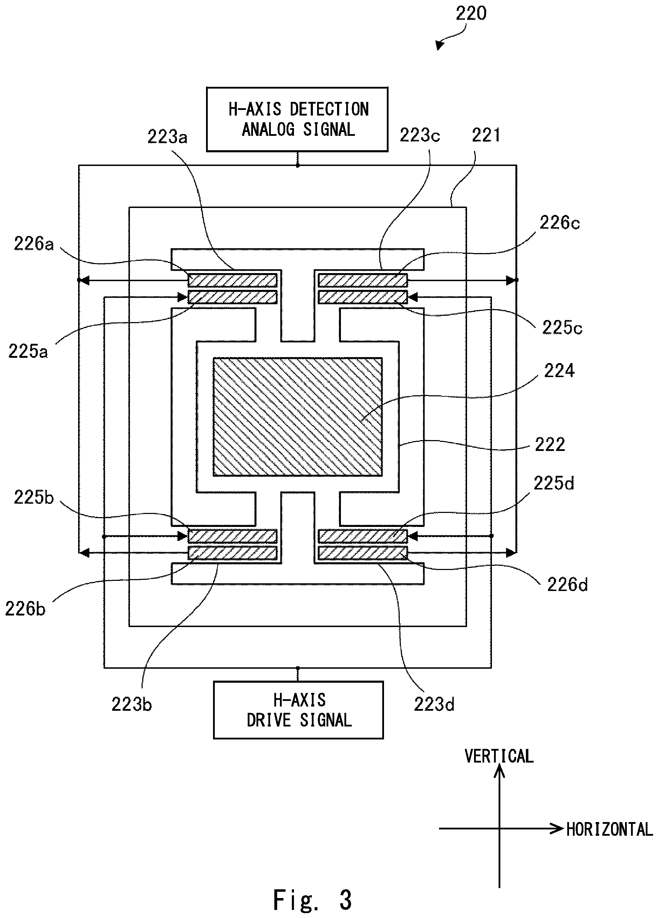

Figs. 2 and 3 are front views showing configuration examples of the horizontal scanner 200 as viewed from the mirror side. The vertical scanner 210 may be configured in the same manner as the horizontal scanner 220.

The optical scanner serving as the horizontal scanner 220 (and the vertical scanner 210) is a MEMS element created by a MEMS (Micro Electro Mechanical Systems) technique. For example, the horizontal scanner 220 is formed by etching an SOI (Silicon On Insulator) substrate including a piezoelectric film such as a PZT (lead zirconate titanate) film.

As shown in Figs. 2 and 3, the horizontal scanner 220 includes a frame body 221 which constitutes a frame of a body; a rocking piece 222 which is supported in a state where it is separated from the frame body 221; four L-shaped beam portions 223a to 223d which connect the inner edge of the frame body 221 with the rocking piece 222; and a MEMS mirror 224 which is formed on the surface of the rocking piece 222. The MEMS mirror 224 is formed by depositing a metal (for example, Al or Au) having a high reflectivity.

The L-shaped beam portions 223a to 223d are connected to the rocking piece 222 at a location close to the center of the rocking piece 222 in the horizontal direction, and the rocking piece 222 and the MEMS mirror 224 are rockable in the horizontal direction with the connected portion as a rocking shaft. It can also be said that the L-shaped beam portions 223a to 223d constitute a torsion bar that rockably supports the rocking piece 222.

A plurality of piezoelectric films extending in the horizontal direction are disposed on the four L-shaped beam portions 223a to 233d, respectively. For example, the piezoelectric films each have a stacked structure in which a piezoelectric film is sandwiched between a lower electrode and an upper electrode.

In the example shown in Fig. 2, driving piezoelectric films 225a and 225b, each of which is supplied with the H-axis drive signal, are disposed on the L-shaped beam portions 223a and 223b, respectively, and detection piezoelectric films 226a and 226b to detect the operation of the MEMS mirror 224 (rocking piece 222) are disposed on the L-shaped beam portions 223c and 223d, respectively, which are opposed to the L-shaped beam portions 223a and 223b, respectively.

In the example shown in Fig. 3, pairs of a driving piezoelectric film and a detection piezoelectric film (225a and 226a, 225b and 226b, 225c and 226c, and 225d and 226d) are disposed on the L-shaped beam portions 223a to 223d, respectively.

When the H-axis drive signal is supplied to the driving piezoelectric films 225a and 225b shown in Fig. 2 or to the driving piezoelectric films 225a to 225d shown in Fig. 3, the driving piezoelectric films 225a and 225b or the driving piezoelectric films 225a to 225d are oscillated according to the H-axis drive signal. This oscillation is transmitted to the rocking piece 222 via the L-shaped beam portions 223a and 223b or the L-shaped beam portions 223a to 223d, thereby allowing the rocking piece 222 and the MEMS mirror 224 to oscillate.

The detection piezoelectric films 226a and 226b shown in Fig. 2, or the detection piezoelectric films 226a to 226d shown in Fig. 3, which correspond to the scanning detection unit 202, detect the oscillation of the rocking piece 222 and the MEMS mirror 224, and output the H-axis detection analog signal according to the detected oscillation. The H-axis drive signal having a predetermined phase difference with respect to the H-axis detection analog signals, which are obtained from the detection piezoelectric films 226a and 226b or from the detection piezoelectric films 226a to 226d, is fed back to the driving piezoelectric films 225a and 225b or to the driving piezoelectric films 225a to 225d, thereby allowing the rocking piece 222 and the MEMS mirror 224 to be resonantly driven.

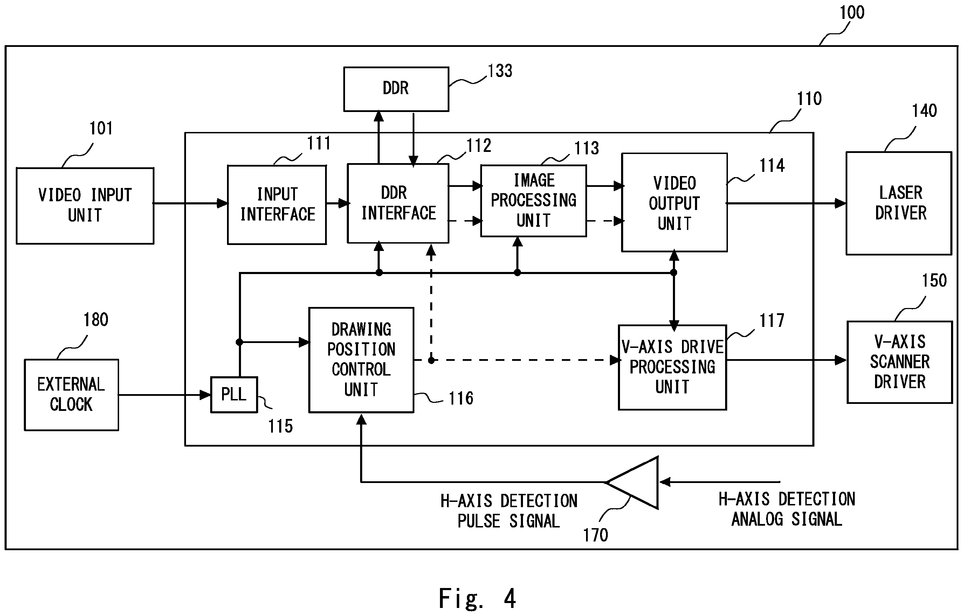

Fig. 4 shows functional blocks of the FPGA 110 according to this embodiment. As shown in Fig. 4, the FPGA 110 includes an input interface 111, a DDR interface 112, an image processing unit 113, a video output unit 114, a PLL (Phase Locked Loop) 115, a drawing position control unit 116, and a V-axis drive processing unit 117.

The input interface 111 is an interface between the FPGA 110 and the video input unit 101. The input interface 111 receives video data input from the video input unit 101, and outputs the received video data to the DDR interface 112.

The DDR interface 112 is an interface between the FPGA 110 and the DDR memory 133. The input interface 111 temporarily stores the received video data in the DDR memory 133, and retrieves the video data stored in the DDR 133 according to an internal clock.

The DDR interface 112 writes the video data (image data) into the DDR memory 133 in units of frames, and reads out, from the DDR memory 133, the image data line by line in one frame in the horizontal direction in synchronization with the internal clock. Further, since drawing is performed in forward and reverse lines in the reciprocating operation of the horizontal scanner 220, the DDR interface 112 reads out the image data in the forward order of addresses in the forward line for the drawing operation, and the DDR interface 112 reads out the image data in the reverse order of addresses in the reverse line for the drawing operation. Thus, the image data in the forward line and the image data in the reverse line are sorted.

The image processing unit 113 performs necessary image processing, such as a change of an aspect ratio and bright control, on the image data retrieved from the DDR 113 by the DDR interface 112. The video output unit (image output unit) 114 outputs, to the laser driver 140, the image data on which the image processing is performed by the image processing unit 113. The video output unit 114 determines a drawing position by using a drawing position clock (pixel clock), which is generated by the H-axis detection waveform and the V-axis drive signal, and HSync (H-axis sync signal) and VSync (V-axis sync signal), and outputs the image data line by line at a timing corresponding to the determined drawing position.

The PLL 115 receives an external clock 180, generates an internal clock based on the external clock 180, and supplies the generated internal clock to each block.

The drawing position control unit (clock generation unit) 116 generates a pixel clock based on the internal clock generated by the PLL 115 so that the synchronization between the horizontal scanner 220 and laser drawing is established. The pixel clock is, for example, a clock synchronous with a pixel counter to be described later. The drawing position control unit 116 generates the pixel clock, the HSync, and VSync to determine the drawing position based on the H-axis detection pulse signal and the V-axis drive signal. The drawing position control unit 116 starts counting of the counter from the edge position of the H-axis detection pulse signal, and determines the drawing area according to the counted counter value. The drawing position control unit 116 is a display position determination unit that determines the image display position in each line based on a difference between the operation range of the horizontal scanner 220 detected by the scanning detection unit 202 and a reference range.

The V-axis drive processing unit 117 generates the V-axis drive signal based on the HSync and VSync, and outputs the generated V-axis drive signal to the V-axis scanner driver 150. For example, in the case of a VGA (Video Graphics Array) display, the vertical scanning frequency is 60 Hz, and the V-axis drive signal is output so that the vertical scanner 210 is oscillated in the vertical direction at 60 Hz.

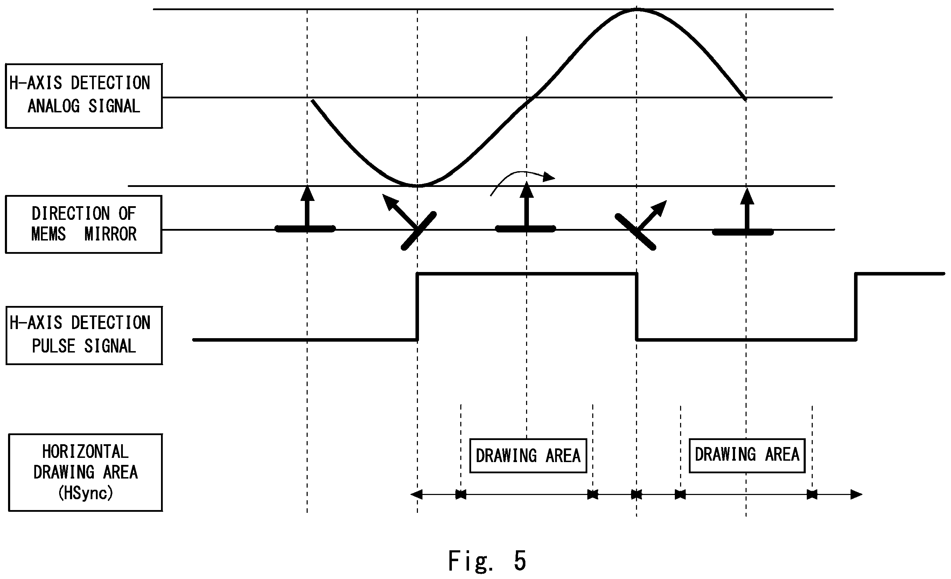

Fig. 5 shows an example of the H-axis detection analog signal and the H-axis detection pulse signal according to this embodiment. The H-axis detection analog signal has a waveform detected by the piezoelectric films (for example, the detection piezoelectric films 226a and 226b shown in Fig. 2, or the detection piezoelectric films 226a to 226d shown in Fig. 3) which are each formed on one side of the horizontal scanner 220 which is driven on both sides thereof in the horizontal direction.

As shown in Fig. 5, the H-axis detection analog signal has an analog waveform depending on the direction of the MEMS mirror 224 of the horizontal scanner 220. For this reason, the H-axis detection analog signal cannot be directly processed by the FPGA 110. Accordingly, in this embodiment, the H-axis detection analog signal is converted into a pulse-like rectangular wave by using the comparator 170 or the like, and the rectangular wave is input to the FPGA 110 as the H-axis detection pulse signal.

In this embodiment, the H-axis detection pulse signal is generated in such a manner that an edge of the H-axis detection pulse signal is located at a position corresponding to a maximum angular deflection of the MEMS mirror 224. For example, the H-axis detection pulse signal is generated in such a manner that rising and falling are repeated every time each of a minimum value (minimum peak) and a maximum value (maximum peak) of the H-axis detection analog signal occurs. Further, the drawing area in the horizontal direction is set in the area between the edges of the H-axis pulse signal.

Next, a drawing position control method that is a main feature of this embodiment will be described.

In the image display device of the laser scan system, when drawing is performed, the H-axis detection waveform (H-axis detection pulse signal), which is output from a detection circuit, such as a piezoelectric film, and detects the operation of the MEMS mirror 224, is loaded into the FPGA 110 and used as a reference signal for drawing timing.

However, when the operation of the MEMS mirror 224 is varied due to the oscillation and electrical effects, the H-axis detection pulse signal is also varied. Since the edge intervals of the H-axis detection pulse signal are counted in the FPGA 110, a variation in the frequency of the H-axis detection pulse signal causes a deviation in the number of counts in the FPGA 110 and a deviation in the drawing timing, which results in misalignment of the projected image 300 to be drawn in each line. This embodiment solves this problem as follows.

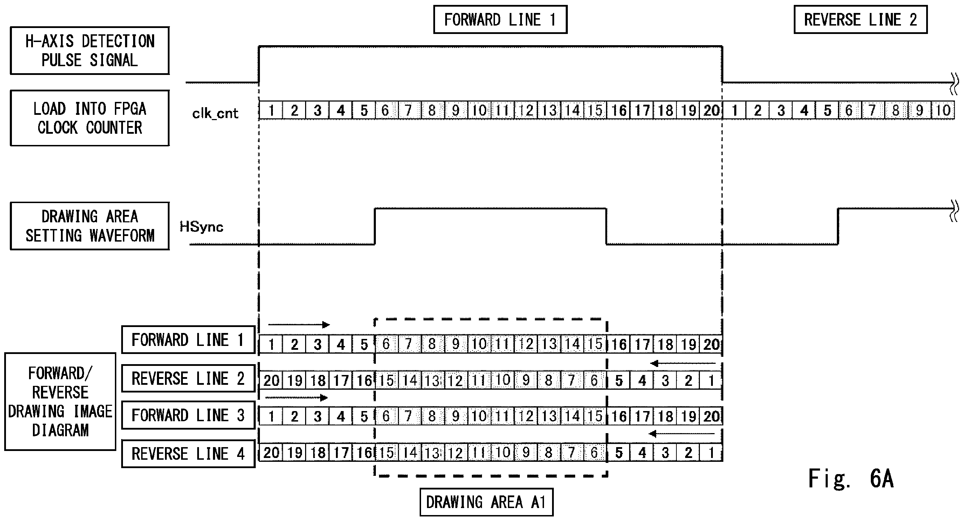

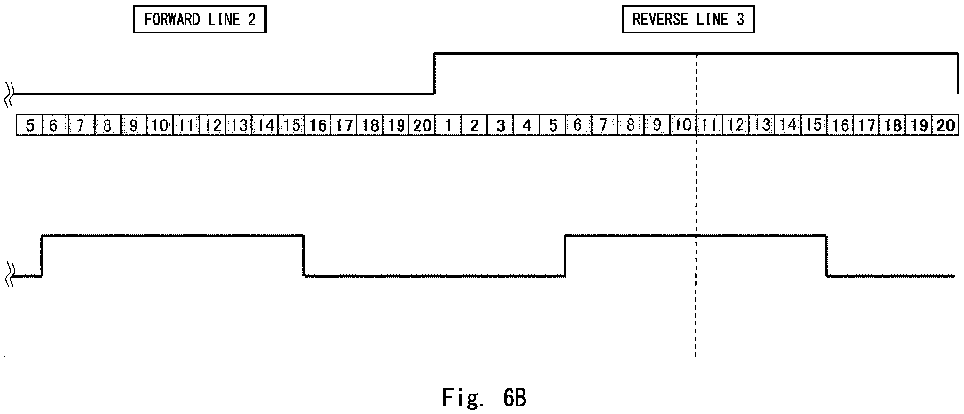

First, an ideal operation for the detection pulse signal when the operation of the MEMS mirror is not changed will be described with reference to Figs. 6A and 6B. For example, Figs. 6A and 6B show operations according to a reference example in configurations similar to those shown in Figs. 1 to 3 and 5.

As shown in Figs. 6A and 6B, the H-axis detection pulse signal ideally has a detection waveform with a constant period, i.e., a rectangular wave in which High and Low are repeated at regular intervals between edges (at regular intervals between a rising edge and a subsequent falling edge, or at regular intervals between a falling edge and a subsequent rising edge).

The FPGA 110 counts the edge intervals of the H-axis detection pulse signal according to the internal clock synchronous with a dot (pixel). Since the H-axis detection pulse signal has a constant period, the counter value of a clock counter (clk cnt) is a constant value. In this case, for example, an edge interval corresponds to 20 counts, and counter values = 1 to 20 are repeated. For simplification of the explanation, counting is started from the counter value = 1. However, counting may be started from the counter value = 0 (the same applies hereinafter).

In this case, for example, the area between counter values 6 to 15 is set as the drawing area. As a result, the HSync for setting the drawing area has a waveform in which a rising edge corresponding to the timing of the counter value 6 and a falling edge corresponding to the timing of the counter value 15 are repeated in each of the forward and reverse lines.

As a result, the drawing area for the projected image 300 which is drawn by a repetition of the forward line and the reverse line corresponds to an area A1. Referring to Figs. 6A and 6B, the H-axis detection pulse signal has a constant period and the HSync also has a constant period. Accordingly, no deviation occurs in the drawing position of the drawing area A1 in each line, so that the longitudinal lines in the vertical direction are aligned.

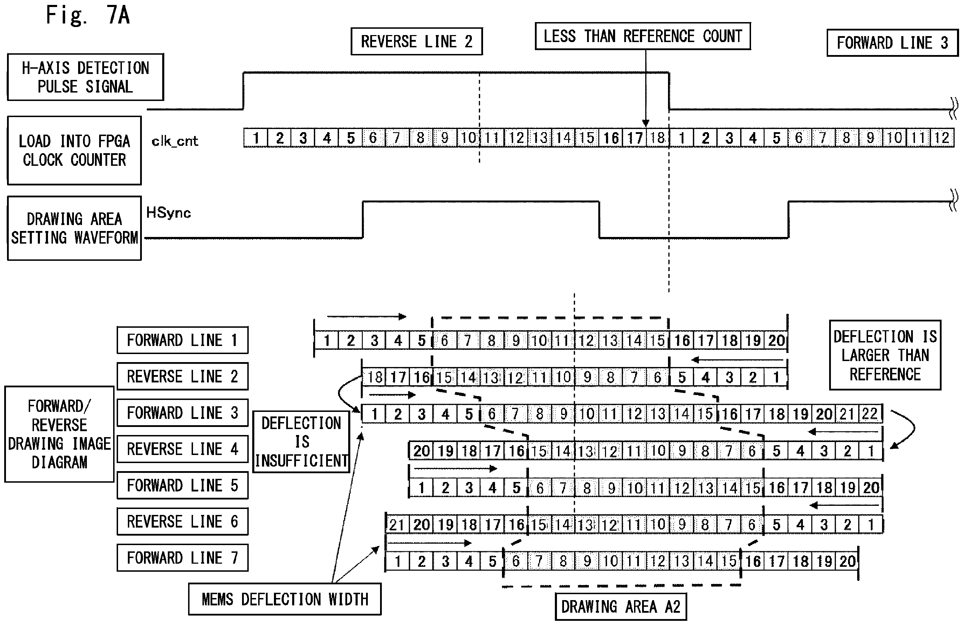

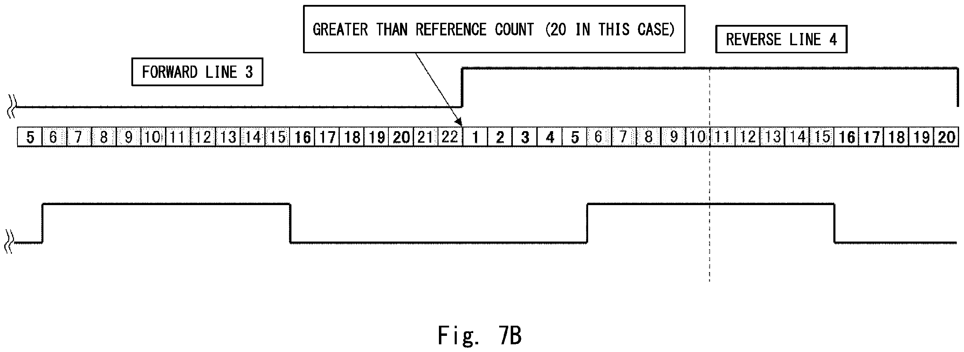

Referring next to Figs. 7A and 7B, an example of the detection pulse signal when the operation of the MEMS mirror is varied in the reference example prior to the application of this embodiment will be described. For example, Figs. 7A and 7B show operations according to the reference example which is an example of configurations similar to those of Figs. 1 to 3 and 5.

As shown in Figs. 7A and 7B, when the operation of the MEMS mirror 224 is not constant, the waveform of the frequency (edge interval) of the H-axis detection pulse signal is not constant but varies. When the H-axis detection pulse signal is loaded into the FPGA 110 and the edge intervals of the H-axis detection pulse signal are counted, the counter value of the clock counter varies in each edge interval.

When the deflection of the MEMS mirror 224 is less than the ideal reference, the edge intervals of the H-axis detection pulse signal are narrowed, so that the counter value becomes small. When the deflection of the MEMS mirror 224 is greater than the ideal reference, the edge intervals of the H-axis detection pulse signal are widened, so that the counter value becomes large. For example, a forward line 1 corresponds to 20 counts, a reverse line 2 corresponds to 18 counts; a forward line 3 corresponds to 22 counts; and a reverse line 4 corresponds to 20 counts.

When the range from the counter value 6 to the counter value 15 is set as the drawing area, the HSync for setting the drawing area has a waveform that repeatedly rises at the timing corresponding to the counter value 6 and falls at the timing corresponding to the counter value 15 in each of the forward and reverse lines in which the edge interval (the number of counts) varies.

As a result, the drawing area for the projected image 300 which is drawn by a repetition of the forward line and the reverse line corresponds to an area A2. Referring to Figs. 7A and 7B, the period (edge interval) of the H-axis detection pulse signal varies and the period of the HSync also varies. Accordingly, a deviation occurs in the drawing position of the drawing area A2 in each line. Prior to the application of the embodiment, drawing is performed by generating the timing waveform (HSync) for drawing based on the counter value of the H-axis detection pulse signal. Accordingly, when the number of counts in the forward line is different from the number of counts in the reverse line, a longitudinal line displacement occurs in the drawing area.

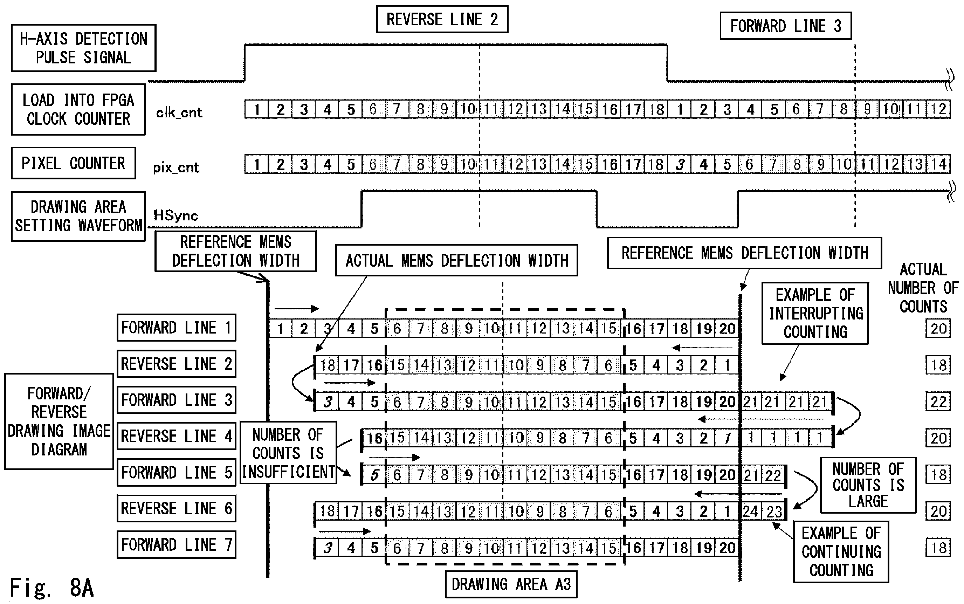

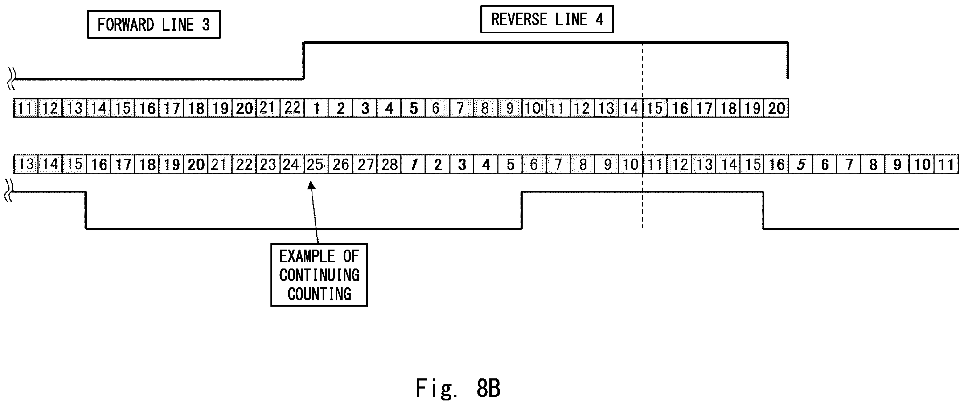

Referring next to Figs. 8A and 8B, an example of the detection pulse signal when the operation of the MEMS mirror is varied after the application of this embodiment will be described. Figs. 8A and 8B show operations in the configurations of this embodiment illustrated in Figs. 1 to 5.

In this embodiment, a line reference value is set as a reference for the edge interval (1 line) of the H-axis detection pulse signal. When the counter value is smaller than the line reference value, a value calculated from the line reference value is used as a start counter value from which counting is started in the next line. When the counter value is greater than the line reference value, counting of the number of extra counts is continued in the next line, or counting is interrupted, and then counting is started from the same position as the counting start position corresponding to the line reference value.

The line reference value represents the ideal deflection width of the MEMS mirror 224. In this case, the line reference value is an average value of the numbers of counts (or counter values) obtained by counting in a plurality of lines. For example, the number of edge intervals of the H-axis detection pulse signal from the MEMS mirror 224 is counted in a blanking area prior to the display of image data, and the values corresponding to eight lines are averaged and the average value thus obtained is set as the line reference value.

For example, when Line 1 = 20 counts, Line 2 = 18 counts, Line 3 = 22 counts, Line 4 = 20 counts, Line 5 = 18 counts, Line 6 = 20 counts, Line 7 = 20 counts, and Line 9 = 22 counts, the average value "20 counts" is set as the line reference value in one frame. In Line 10 and subsequent lines, the counter value is set based on the line reference value.

Referring to Figs. 8A and 8B, the waveform of the frequency (edge interval) of the H-axis detection pulse signal is not constant but varies, like in Figs. 7A and 7B. When the edge intervals of the H-axis detection pulse signal are counted according to the internal clock, the counter value of the clock counter (clk_cnt) varies in each edge interval. Accordingly, in this embodiment, the line reference value is set in such a manner that the start counter value in the next line is set at the same position as the count value corresponding to the line reference value.

The clock for counting the H-axis detection pulse signal from the counter value = 1 is referred to as a clock counter (clk_cnt), and the clock for counting the H-axis detection pulse signal from the start counter value set based on the line reference value is referred to as a pixel counter (pix_cnt).

In Figs. 8A and 8B, for example, the forward line 1 corresponds to 20 counts (clk_cnt = 1 to 20); the reverse line 2 corresponds to 18 counts (clk_cnt = 1 to 18); the forward line 3 corresponds to 22 counts (clk_cnt = 1 to 22); and the reverse line 4 corresponds to 20 counts (clk_cnt = 1 to 20), like in Figs. 7A and 7B.

In an example in which the deflection of the MEMS mirror 224 is less than the reference value, the number of counts in, for example, the reverse line 2 is 18, which is smaller than the line reference value "20 counts", and the deflection of the MEMS mirror 224 is insufficient. In this example, the length at the left edge of the reverse line 2 in the horizontal direction is shorter than the line reference value. In this case, the difference value (20 - 18 = 2) is obtained by subtracting the counter value (pix_cnt = 18) of the pixel counter from the 20 counts of the line reference value. In the next line, the value (1 + 2 = 3) obtained by adding the difference value to the minimum value = 1 of the counter is set as the start counter value for the next forward line 3 so that the timing is shifted by an amount corresponding to the number of dots of the difference value (an amount corresponding to the difference between the counter value and the reference value). Specifically, when the counter value is smaller than the line reference value, the counter value is increased based on the difference between the counter value and the line reference value, to thereby shorten the interval from the edge of the next line to the drawing area. Therefore, the positions in the vertical direction of the counter values 6 to 15 in the reverse line 2 are the same as the positions in the vertical direction of the counter values 6 to 15 in the forward line 3.

Further, in an example in which the deflection of the MEMS mirror 224 is greater than the reference value, the number of counts in, for example, the forward line 3 is 22, which is greater than the line reference value "20 counts", and the deflection of the MEMS mirror 224 is extremely large. In this example, the length at the right edge of the forward line 3 in the horizontal direction is longer than the line reference value. In this case, the difference value (24 - 20 = 4) is obtained by subtracting 20 counts of the line reference value from the counter value (pix cnt = 24) obtained by counting the edge intervals to the edge of the forward line 3 by the pixel counter. In the next reverse line 4, counting is started from the next position (4 + 1 = fifth count) corresponding to the number of counts of the difference value so that the timing is shifted by an amount corresponding to the number of dots of the difference value (an amount corresponding to the difference between the counter value and the reference value). Specifically, when the counter value is greater than the line reference value, a counting start timing is delayed based on the difference between the counter value and the line reference value, thereby increasing the interval from the edge of the next line to the drawing area. Thus, the positions in the vertical direction of the counter values 6 to 15 in the forward line 3 are the same as the positions in the vertical direction of the counter values 6 to 15 in the reverse line 4.

For example, at this time, the counter value is not increased during a period of time corresponding to the number of counts of the difference value. Also in the next line, the count value "1" is maintained for a period of time corresponding to the counter value "four counts" in which the counter is interrupted, and then normal counting is started from the value "1". Alternatively, counting may be continued without interrupting the counter, until counting in the next line is started.

Through this control, the HSync for setting the drawing area has a waveform that repeatedly rises at the timing corresponding to the corrected counter value 6 and falls at the timing corresponding to the corrected counter value 15 in each of the forward and reverse lines in which the edge interval (the number of counts) varies.

As a result, the drawing area for the projected image 300 which is drawn by a repetition of the forward line and the reverse line corresponds to an area A3. Referring to Figs. 8A and 8B, the counter is controlled based on the difference between the reference value and the edge interval of the H-axis detection pulse signal, so that the distance from the drawing area in the preceding line to the trailing edge thereof can be made equal to the distance from the leading edge of the next line to the drawing area. That is, in this embodiment, the count value is controlled based on the reference counter value and the count value from the detection pulse signal of the MEMS mirror so as to match the drawing areas in each longitudinal line, thereby making it possible to keep the drawing area range constant and eliminate a displacement of each longitudinal line.

The set value of the line reference value will now be described in more detail. In the above embodiment, the line reference value is determined based on the average value obtained by counting in a plurality of lines. For example, the average value of eight lines in one frame is set as the line reference value. However, if the line reference value is an odd number, drawing misalignment by one dot occurs. For this reason, it is preferable that the line reference value be constantly set to an even number.

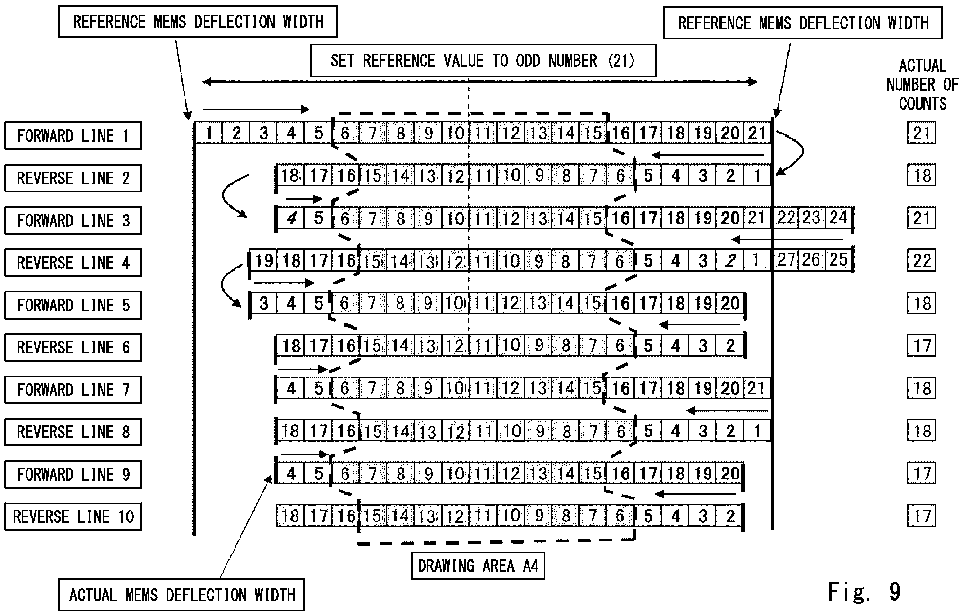

Fig. 9 shows an example in which the line reference value is set to an odd number. Fig. 9 shows an example in which the line reference value is 21 and the range from the counter value 6 to the counter value 15 is set as the drawing area. In this case, the drawing area for the projected image 300 which is drawn by a repetition of the forward line and the reverse line corresponds to an area A4.

As shown in Fig. 9, when the line reference value is set to an odd number, the drawing position (counter values 6 to 15) in the forward line and the drawing position (counter values 6 to 15) in the reverse line deviate from each other by one dot, so that the forward and reverse lines are staggered. Accordingly, in this embodiment, the line reference value is constantly set to an even number, to thereby prevent an occurrence of a displacement between the forward and reverse lines. For example, when the average value is 21, the reference value is set to 20 or 22.

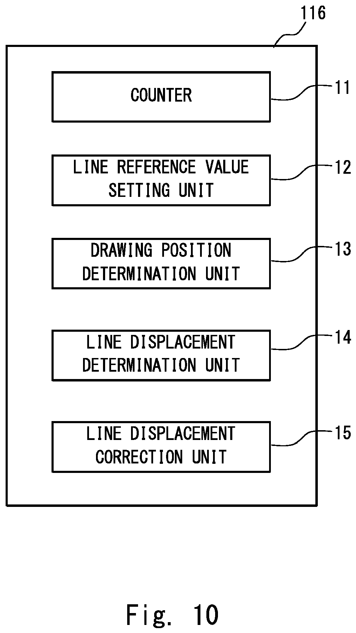

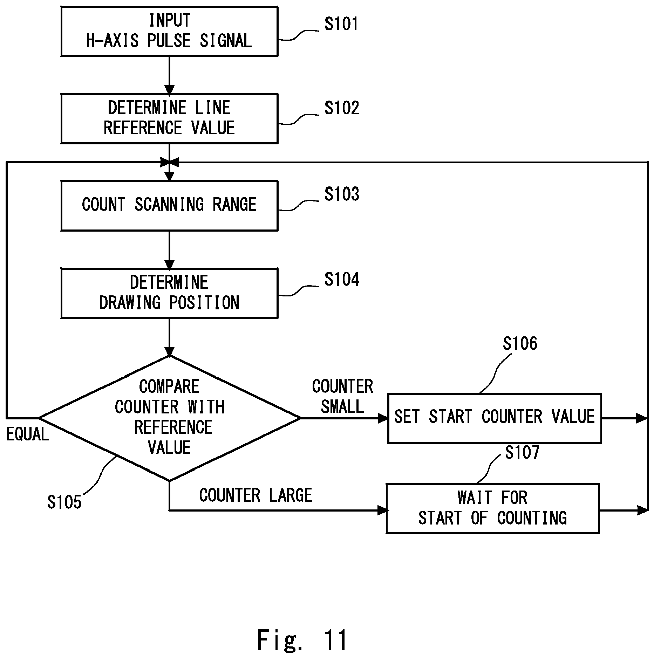

Next, a configuration example for implementing the operation of this embodiment as described above with reference to Figs. 8A and 8B will be described. Fig. 10 is an example of functional blocks of the drawing position control unit 116. Fig. 11 is an example of a flowchart for the drawing position control unit 116. The operation shown in Figs. 8A and 8B may be implemented by other configurations.

As shown in Fig. 10, the drawing position control unit 116 includes a counter 11, a line reference value setting unit 12, a drawing position determination unit 13, a line displacement determination unit 14, and a line displacement correction unit 15.

The counter 11 is a counter that counts the edge intervals of the H-axis detection pulse signal. The counter 11 includes the clock counter shown in Fig. 8A and the pixel counter shown in Fig. 8B. The line reference value setting unit 12 sets a line reference value as a counter reference value in one line.

The drawing position determination unit 13 determines the drawing position (drawing area) based on the value of the counter 11. The line displacement determination unit 14 compares the value of the counter 11 with the line reference value, and determines a displacement of each line. The line displacement correction unit 15 corrects the start counter value, or interrupts the counter, as shown in Figs. 8A and 8B, to correct the determined line displacement.

As shown in Fig. 11, when the input of the H-axis detection pulse signal to the drawing position control unit 116 is started (S101), the line reference value setting unit 12 first sets the line reference value. As described above, after the counter 11 counts the edge intervals of the H-axis detection pulse signal a plurality of times, the line reference value setting unit 12 obtains an average value of the counter values and sets the line reference value. In particular, the line reference value setting unit 12 sets the line reference value to an even number as described above.

Next, the counter 11 counts the scanning range of the MEMS mirror (S103). The counter 11 is synchronous with the internal clock and counts the edge intervals of the H-axis detection pulse signal by using the clock counter (clk cnt) and the pixel counter (pix cnt) as shown in Figs. 8A and 8B.

Next, the drawing position determination unit 13 determines the drawing position based on the counter value. For example, the drawing position determination unit 13 sets the area between the counter values 5 to 14 as the drawing area, and generates the HSync which repeatedly rises at the timing corresponding to the counter value 5 and falls at the timing corresponding to the counter value 14.

Next, the line displacement determination unit 14 compares the counter value with the line reference value (S105). When the counter value is equal to the line reference value, there is no line displacement, so that the counting and drawing position determination are carried out (S103, S104).

When the counter value is smaller than the line reference value, as shown in Figs. 8A and 8B, the start counter value is set to correct the position of the drawing area based on the difference between the line reference value and the counter value (S106). After that, counting is started from the set start counter value, and the drawing position is determined (S103, S104).

When the counter value is greater than the line reference value, as shown in Figs. 8A and 8B, the start of counting is awaited so that the position of the drawing area is corrected based on the difference between the counter value and the line reference value (S107). After that, counting is started at the timing when there is no difference between the counter value and the line reference value, and the drawing position is determined (S103, S104).

As described above, according to this embodiment, in the image display device of the laser scan system, the operation of the MEMS mirror is detected by the piezoelectric films formed on the optical scanner, and the drawing position is corrected based on the difference between the detected operation range and the reference range. Thus, a deviation in the drawing position which is caused by a change in the detection waveform due to a variation in the operation of the MEMS mirror is corrected and the drawing area is constantly set at a certain location, thereby preventing drawing misalignment in each line. In particular, the count value for setting the drawing position is set to be constant with respect to the reference, instead of setting the count value to be always constant, thereby eliminating the misalignment of the drawing position in each line and preventing drawing misalignment.

Note that the present invention is not limited to the above embodiments, and can be modified as appropriate without departing from the scope of the invention defined in the appended claims.

### Reference Signs List

- 11: COUNTER
- 12: LINE REFERENCE VALUE SETTING UNIT
- 13: DRAWING POSITION DETERMINATION UNIT
- 14: LINE DISPLACEMENT DETERMINATION UNIT
- 15: LINE DISPLACEMENT CORRECTION UNIT
- 100: IMAGE DISPLAY DEVICE
- 101: VIDEO INPUT UNIT
- 111: INPUT INTERFACE
- 112: DDR INTERFACE
- 113: IMAGE PROCESSING UNIT
- 114: VIDEO OUTPUT UNIT
- 116: DRAWING POSITION CONTROL UNIT
- 117: V-AXIS DRIVE PROCESSING UNIT
- 120: MICROCOMPUTER
- 131,132: FLASH MEMORY
- 133: DDR MEMORY
- 140: LASER DRIVER
- 150: V-AXIS SCANNER DRIVER
- 160: H-AXIS SCANNER DRIVER
- 170: COMPARATOR
- 180: EXTERNAL CLOCK
- 200: RGB LASER DIODE
- 201: OPTICAL SCANNER
- 202: SCANNING DETECTION UNIT
- 210: VERTICAL SCANNER
- 220: HORIZONTAL SCANNER
- 221: FRAME BODY
- 222: ROCKING PIECE
- 223a - 223d: L-SHAPED BEAM PORTION
- 224: MEMS MIRROR
- 225a - 225d: DRIVING PIEZOELECTRIC FILM
- 226a - 226d: DETECTION PIEZOELECTRIC FILM
- 300: PROJECTED IMAGE

## Claims

1. An image display device (100) comprising:
a light source unit (200) configured to output a light beam;
a scanning unit (220) configured to reflect the light beam and repeat a reciprocating operation in a predetermined scanning direction;
a scanning detection unit (202) configured to detect an operation range of the scanning unit (220) in each forward or reverse scanning line of the reciprocating operation; wherein detecting an operation range includes generating a detection pulse signal having pulse edges located at the minimum and maximum angular deflection of the scanning unit;
a counter (11) configured to count the detected operation range based on a clock;
a display position determination unit (116) configured to determine an image display position in each scanning line based on a difference between the detected operation range and a reference range;
a drawing position determination unit (13) which determines the drawing position based on the counter value; wherein the counter value for setting the drawing position is set to be constant;
and
a light source driving unit (140) configured to drive the light source unit (200) based on image data at a timing corresponding to the determined image display position and the drawing position;
**characterized in that**:
when a counter value obtained by counting during the detected operation range by the counter (11) is smaller than a counter value corresponding to the reference range that is an ideal operation range, the display position determination unit (116) shortens an interval from a start point of operation of the scanning unit (220) in a subsequent scanning line to the image display position by increasing a start count value of the counter (11) in the subsequent scanning line based on the difference between the counter value of the detected operation range and the counter value corresponding to the reference range, and
when a counter value obtained by counting during the detected operation range by the counter (11) is larger than a counter value corresponding to the reference range that is an ideal operation range, the display position determination unit (116) increases the interval from the start point of operation of the scanning unit (220) in the subsequent scanning line to the image display position by delaying a counting start timing of the counter (11) in the subsequent scanning line based on the difference between the counter value of the detected operation range and the counter value corresponding to the reference range.

2. The image display device (100) according to Claims 1, wherein the display position determination unit (116) sets the reference range based on an average of a plurality of detected operation ranges.

3. The image display device (100) according to Claims 1 or 2, wherein the display position determination unit (116) sets the reference range in such a manner that a count value obtained by counting the operation range based on a clock becomes an even number.

4. A control method of an image display device (100), the image display device (100) comprising:
a light source unit (200) configured to output a light beam; and a scanning unit (220) configured to reflect the light beam and repeat a reciprocating operation in a predetermined scanning direction, the control method comprising:
detecting an operation range of the scanning unit (220) in each forward or reverse scanning line of the reciprocating operation; wherein detecting an operation range includes generating a detection pulse signal having pulse edges located at the minimum and maximum angular deflection of the scanning unit;
counting the detected operation range based on a clock;
determining an image display position in each scanning line based on a difference between the detected operation range and a reference range;
determining the drawing position based on the counter value; wherein the counter value for setting the drawing position is set to be constant; and
driving the light source unit (200) based on image data at a timing corresponding to the determined image display position and the drawing position;
**characterized in that**:
when a counter value obtained by counting during the detected operation range is smaller than a counter value corresponding to the reference range that is an ideal operation range, in the determining the image display position, shortening an interval from a start point of operation of the scanning unit (220) in a subsequent scanning line to the image display position by increasing a start count value in the subsequent scanning line based on the difference between the counter value of the detected operation range and the counter value corresponding to the reference range, and
when a counter value obtained by counting during the detected operation range is larger than a counter value corresponding to the reference range, in the determining the image display position that is an ideal operation range, increasing the interval from the start point of operation of the scanning unit (220) in the subsequent scanning line to the image display position by delaying a counting start timing in the subsequent scanning line based on the difference between the counter value of the detected operation range and the counter value corresponding to the reference range.

## Patentansprüche

1. Bildanzeigevorrichtung (100), umfassend:
eine Lichtquelleneinheit (200), die dafür ausgelegt ist, einen Lichtstrahl auszugeben;
eine Scaneinheit (220), die dafür ausgelegt ist, den Lichtstrahl zu reflektieren und einen hin- und hergehenden Betrieb in einer vorbestimmten Scanrichtung zu wiederholen;
eine Scanerkennungseinheit (202), die dafür ausgelegt ist, einen Betriebsbereich der Scaneinheit (220) in jeder Vorwärts- oder Rückwärtsscanzeile des hin- und hergehenden Betriebs zu erkennen; wobei das Erkennen eines Betriebsbereichs Erzeugen eines Erkennungsimpulssignals mit Impulsflanken beinhaltet, die sich bei der minimalen und maximalen Winkelablenkung der Scaneinheit befinden;
ein Zähler (11), der dafür ausgelegt ist, den erkannten Betriebsbereich basierend auf einem Takt zu zählen;
eine Anzeigepositionsbestimmungseinheit (116), die dafür ausgelegt ist, eine Bildanzeigeposition in jeder Scanzeile basierend auf einer Differenz zwischen dem erkannten Betriebsbereich und einem Referenzbereich zu bestimmen;
eine Zeichenpositionsbestimmungseinheit (13), die die Zeichenposition basierend auf dem Zählerwert bestimmt;
wobei der Zählerwert für das Einstellen der Zeichenposition als konstant eingestellt ist;
und
eine Lichtquellenansteuerungseinheit (140), die dafür ausgelegt ist, die Lichtquelleneinheit (200) basierend auf Bilddaten zu einem Zeitpunkt anzusteuern, der der bestimmten Bildanzeigeposition und der Zeichenposition entspricht;
**dadurch gekennzeichnet, dass**:
wenn ein Zählerwert, der durch Zählen während des erkannten Betriebsbereichs durch den Zähler (11) erhalten wird, kleiner ist als ein Zählerwert, der dem Referenzbereich entspricht, bei dem es sich um einen idealen Betriebsbereich handelt, die Anzeigepositionsbestimmungseinheit (116) ein Intervall von einem Startpunkt des Betriebs der Scaneinheit (220) in einer nachfolgenden Scanzeile zur Bildanzeigeposition verkürzt, indem ein Startzählwert des Zählers (11) in der nachfolgenden Scanzeile basierend auf der Differenz zwischen dem Zählerwert des erkannten Betriebsbereichs und dem Zählerwert, der dem Referenzbereich entspricht, erhöht wird, und
wenn ein Zählerwert, der durch Zählen während des erkannten Betriebsbereichs durch den Zähler (11) erhalten wird, größer ist als ein Zählerwert, der dem Referenzbereich entspricht, bei dem es sich um einen idealen Betriebsbereich handelt, die Anzeigepositionsbestimmungseinheit (116) das Intervall vom Startpunkt des Betriebs der Scaneinheit (220) in der nachfolgenden Scanzeile zur Bildanzeigeposition erhöht, indem ein Zählstartzeitpunkt des Zählers (11) in der nachfolgenden Scanzeile basierend auf der Differenz zwischen dem Zählerwert des erkannten Betriebsbereichs und dem Zählerwert, der dem Referenzbereich entspricht, verzögert wird.

2. Bildanzeigevorrichtung (100) nach Anspruch 1, wobei die Anzeigepositionsbestimmungseinheit (116) den Referenzbereich basierend auf einem Durchschnitt aus mehreren erkannten Betriebsbereichen einstellt.

3. Bildanzeigevorrichtung (100) nach Anspruch 1 oder 2, wobei die Anzeigepositionsbestimmungseinheit (116) den Referenzbereich dergestalt einstellt, dass ein Zählwert, der durch Zählen des Betriebsbereichs basierend auf einem Takt erhalten wird, eine gerade Zahl wird.

4. Steuerverfahren einer Bildanzeigevorrichtung (100), wobei die Bildanzeigevorrichtung (100) umfasst: eine Lichtquelleneinheit (200), die dafür ausgelegt ist, einen Lichtstrahl auszugeben; und eine Scaneinheit (220), die dafür ausgelegt ist, den Lichtstrahl zu reflektieren und einen hin- und hergehenden Betrieb in einer vorbestimmten Scanrichtung zu wiederholen, wobei das Steuerverfahren umfasst:
Erkennen eines Betriebsbereichs der Scaneinheit (220) in jeder Vorwärts- oder Rückwärtsscanzeile des hin- und hergehenden Betriebs; wobei das Erkennen eines Betriebsbereichs Erzeugen eines Erkennungsimpulssignals mit Impulsflanken beinhaltet, die sich bei der minimalen und maximalen Winkelablenkung der Scaneinheit befinden;
Zählen des erkannten Betriebsbereichs basierend auf einem Takt;
Bestimmen einer Bildanzeigeposition in jeder Scanzeile basierend auf einer Differenz zwischen dem erkannten Betriebsbereich und einem Referenzbereich;
Bestimmen der Zeichenposition basierend auf dem Zählerwert; wobei der Zählerwert für das Einstellen der Zeichenposition als konstant eingestellt wird; und
Ansteuern der Lichtquelleneinheit (200) basierend auf Bilddaten zu einem Zeitpunkt, der der bestimmten Bildanzeigeposition und der Zeichenposition entspricht;
**dadurch gekennzeichnet, dass**:
wenn ein Zählerwert, der durch Zählen während des erkannten Betriebsbereichs erhalten wird, kleiner ist als ein Zählerwert, der dem Referenzbereich entspricht, bei dem es sich um einen idealen Betriebsbereich handelt, beim Bestimmen der Bildanzeigeposition ein Intervall von einem Startpunkt des Betriebs der Scaneinheit (220) in einer nachfolgenden Scanzeile zur Bildanzeigeposition verkürzt wird, indem ein Startzählwert in der nachfolgenden Scanzeile basierend auf der Differenz zwischen dem Zählerwert des erkannten Betriebsbereichs und dem Zählerwert, der dem Referenzbereich entspricht, erhöht wird, und
wenn ein Zählerwert, der durch Zählen während des erkannten Betriebsbereichs erhalten wird, größer ist als ein Zählerwert, der dem Referenzbereich entspricht, bei dem es sich um einen idealen Betriebsbereich handelt, beim Bestimmen der Bildanzeigeposition, das Intervall vom Startpunkt des Betriebs der Scaneinheit (220) in der nachfolgenden Scanzeile zur Bildanzeigeposition erhöht wird, indem ein Zählstartzeitpunkt in der nachfolgenden Scanzeile basierend auf der Differenz zwischen dem Zählerwert des erkannten Betriebsbereichs und dem Zählerwert, der dem Referenzbereich entspricht, verzögert wird.

## Revendications

1. Dispositif d'affichage d'image (100) comprenant :
une unité de source de lumière (200) configurée pour émettre un faisceau de lumière ;
une unité de balayage (220) configurée pour réfléchir le faisceau de lumière et pour répéter une opération de va-et-vient dans une direction de balayage prédéterminée ;
une unité de détection de balayage (202) configurée pour détecter une plage de fonctionnement de l'unité de balayage (220) dans chaque ligne de balayage vers l'avant ou vers l'arrière de l'opération de va-et-vient ; la détection d'une plage de fonctionnement consistant à générer un signal d'impulsion de détection ayant des fronts d'impulsion situés selon la déflexion angulaire minimale et maximale de l'unité de balayage ;
un compteur (11) configuré pour compter la plage de fonctionnement détectée en se basant sur une horloge ;
une unité de détermination de position d'affichage (116) configurée pour déterminer une position d'affichage d'image dans chaque ligne de balayage en se basant sur une différence entre la plage de fonctionnement détectée et une plage de référence ;
une unité de détermination de position de dessin (13) qui détermine la position de dessin en se basant sur la valeur de compteur ; la valeur de compteur pour définir la position de dessin étant fixée de sorte à être constante ;
et
une unité d'excitation de source de lumière (140) configurée pour exciter l'unité de source de lumière (200) en se basant sur des données d'image à un moment correspondant à la position d'affichage d'image déterminée et à la position de dessin;
**caractérisé en ce que** :
lorsqu'une valeur de compteur obtenue par comptage pendant la plage de fonctionnement détectée par le compteur (11) est plus petite qu'une valeur de compteur correspondant à la plage de référence qui est une plage de fonctionnement idéale, l'unité de détermination de position d'affichage (116) écourte un intervalle allant d'un point de début de fonctionnement de l'unité de balayage (220) dans une ligne de balayage suivante à la position d'affichage d'image en augmentant une valeur de comptage de début du compteur (11) dans la ligne de balayage suivante en se basant sur la différence entre la valeur de compteur de la plage de fonctionnement détectée et la valeur de compteur correspondant à la plage de référence, et
lorsqu'une valeur de compteur obtenue par comptage pendant la plage de fonctionnement détectée par le compteur (11) est plus importante qu'une valeur de compteur correspondant à la plage de référence qui est une plage de fonctionnement idéale, l'unité de détermination de position d'affichage (116) augmente l'intervalle allant du point de début de fonctionnement de l'unité de balayage (220) dans la ligne de balayage suivante à la position d'affichage d'image en retardant un moment de début de comptage du compteur (11) dans la ligne de balayage suivante en se basant sur la différence entre la valeur de compteur de la plage de fonctionnement détectée et la valeur de compteur correspondant à la plage de référence.

2. Dispositif d'affichage d'image (100) selon la revendication 1, dans lequel l'unité de détermination de position d'affichage (116) fixe la plage de référence en se basant sur une moyenne d'une pluralité de plages de fonctionnement détectées.

3. Dispositif d'affichage d'image (100) selon la revendication 1 ou 2, dans lequel l'unité de détermination de position d'affichage (116) fixe la plage de référence de telle manière qu'une valeur de comptage obtenue en comptant la plage de fonctionnement en se basant sur une horloge devienne un nombre pair.

4. Procédé de commande d'un dispositif d'affichage d'image (100), le dispositif d'affichage d'image (100) comprenant : une unité de source de lumière (200) configurée pour émettre un faisceau de lumière ; et une unité de balayage (220) configurée pour réfléchir le faisceau de lumière et pour répéter une opération de va-et-vient dans une direction de balayage prédéterminée, le procédé de commande consistant :
à détecter une plage de fonctionnement de l'unité de balayage (220) dans chaque ligne de balayage vers l'avant ou vers l'arrière de l'opération de va-et-vient ; la détection d'une plage de fonctionnement consistant à générer un signal d'impulsion de détection ayant des fronts d'impulsion situés selon la déflexion angulaire minimale et maximale de l'unité de balayage ;
à compter la plage de fonctionnement détectée en se basant sur une horloge ;
à déterminer une position d'affichage d'image dans chaque ligne de balayage en se basant sur une différence entre la plage de fonctionnement détectée et une plage de référence ;
à déterminer la position de dessin en se basant sur la valeur de compteur ; la valeur de compteur pour définir la position de dessin étant fixée de sorte à être constante ; et
à exciter l'unité de source de lumière (200) en se basant sur des données d'image à un moment correspondant à la position d'affichage d'image déterminée et à la position de dessin ;
**caractérisé par** :
lorsqu'une valeur de compteur obtenue par comptage pendant la plage de fonctionnement détectée est plus petite qu'une valeur de compteur correspondant à la plage de référence qui est une plage de fonctionnement idéale, lors de la détermination de la position d'affichage d'image, l'écourtement d'un intervalle allant d'un point de début de fonctionnement de l'unité de balayage (220) dans une ligne de balayage suivante à la position d'affichage d'image en augmentant une valeur de comptage de début dans la ligne de balayage suivante en se basant sur la différence entre la valeur de compteur de la plage de fonctionnement détectée et la valeur de compteur correspondant à la plage de référence, et
lorsqu'une valeur de compteur obtenue par comptage pendant la plage de fonctionnement détectée est plus importante qu'une valeur de compteur correspondant à la plage de référence, lors de la détermination de la position d'affichage d'image qui est une plage de fonctionnement idéale, l'augmentation de l'intervalle allant du point de début de fonctionnement de l'unité de balayage (220) dans la ligne de balayage suivante à la position d'affichage d'image en retardant un moment de début de comptage dans la ligne de balayage suivante en se basant sur la différence entre la valeur de compteur de la plage de fonctionnement détectée et la valeur de compteur correspondant à la plage de référence.
